Europäisches Patentamt

(19) European Patent Office

Office européen des brevets

(11) Numéro de publication: **0 141 706**
**B1**

(12) # FASCICULE DE BREVET EUROPÉEN

(45) Date de publication du fascicule du brevet:
21.03.90

(21) Numéro de dépôt: **84401910.9**

(22) Date de dépôt: **25.09.84**

(51) Int. Cl.⁵: **G 01 C 11/00,** G 06 F 15/72,
G 06 F 15/62

(54) **Procédé et appareillage pour déterminer l'attitude d'un objet dans l'espace par rapport à un poste d'observation.**

(30) Priorité: **21.10.83 FR 8316835**

(43) Date de publication de la demande:
**15.05.85 Bulletin 85/20**

(45) Mention de la délivrance du brevet:
**21.03.90 Bulletin 90/12**

(84) Etats contractants désignés:
**DE GB SE**

(56) Documents cité:
**FR-A-2 267 591**
**FR-A-2 374 701**

(73) Titulaire: **Office National d'Etudes et de Recherches Aérospatiales (O.N.E.R.A.)**
**29 Avenue de la Division Leclerc**
**F-92320 Châtillon-sous-Bagneux (FR)**

(72) Inventeur: **Garnier, Gérard**
**105, rue Boucicaut**
**F-92320 Fontenay aux Roses (FR)**
Inventeur: **Staron, Michel**
**100, rue du Plateau**
**F-92320 Chatillon sous Bagneux (FR)**

(74) Mandataire: **Piafais, Jean-Yves**
**Cabinet Netter 40, rue Vignon**
**F-75009 Paris (FR)**

LIBERGRAF, STOCKHOLM 1990

## Description

L'invention concerne la détermination de deux angles d'attitude d'un objet dans l'espace par rapport à un poste d'observation, à partir de vues prises au poste d'observation.

Il a déjà été proposé d'effectuer une prise de vue, à l'aide d'une caméra-vidéo, pour repérer la position d'un objet dans l'espace (Certificat d'Addition Français publié sous le N° 2 374 701). Le but du dispositif décrit dans ce certificat d'Addition est de ramener toujours dans la même position un corps, en l'espèce un corps humain, qui doit subir un traitement thérapeutique échelonné dans le temps. Le procédé mis en oeuvre consiste à commander l'acquisition, dans le plan image d'un moniteur de télévision associé à la caméra, des coordonnées de trois points caractéristiques du corps superposables à trois points de référence représentant sur l'écran une position, que l'on cherche à reproduire. Un ensemble de calcul numérique est utilisé pour déterminer quel déplacement doit être appliqué au corps pour obtenir, sur le moniteur de télévision, la coïncidence des trois points caractéristiques du corps avec des points de référence.

Un tel dispositif de traitement d'image ne permet pas de déterminer l'attitude, ni la distance, d'un corps ou d'un objet observé par la caméra. Il suppose d'ailleurs une coopération totale de ce corps, ou objet, en ce sens que l'appareil doit pouvoir contrôler et modifier la position du corps, ou objet. Enfin, le dispositif du certificat d'Addition 2 374 701 ne permet pas non plus d'obtenir une vue en perspective de l'objet visé, à partir des mesures effectuées.

La présente invention vient offrir un procédé et un appareillage qui, à partir de vues prises d'un objet, coopératif ou non, permettent au contraire la détermination de l'attitude, ainsi éventuellement que de la distance de l'objet. Elle met en oeuvre des moyens relativement simples et peu onéreux fournissant une solution élégante au problème de détermination d'attitude, avec une précision satisfaisante (en moyenne de l'ordre de 1°). Enfin, la présente invention permet, dans l'une de ses variantes, d'obtenir une vue en perspective de l'objet, en particulier dans la direction de visée, et de la superposer à l'image donnée par les moyens de prise de vue.

Le procédé selon l'invention a donc pour but de déterminer l'attitude d'un objet dans l'espace, par rapport à un poste d'observation occupé par un observateur, à partir d'une image sensiblement plane de cet objet, prise du poste d'observation. Ce procédé comporte certaines étapes semblables à celles connues d'après le Certificat d'Addition Français antérieur N° 2 374 701. Mais il diffère du procédé antérieur tant par l'agencement particulier de ses étapes, que par le fait qu'il met en oeuvre des moyens spécifiques, lesquels font, pour partie, intervenir certains calculs.

Le procédé selon l'invention comprend essentiellement les étapes consistant à:

a/ enregistrer, au préalable, une représentation numérique d'un modèle géométrique de l'objet, cette représentation numérique comprenant la mise en mémoire des coordonnées, mesurées dans un repère tridimensionnel lié à l'objet et ci-après dénommé repère objet, d'au moins trois points de l'objet optiquement reconnaissables, et non alignés,

b/ définir à partir de cette représentation numérique au moins deux vecteurs-objet, obtenus en reliant deux de ces points au troisième, et dont les composantes sont mesurées dans le repère objet,

c/ déterminer le module de chacun de ces vecteurs-objet, ainsi que le produit scalaire des deux vecteurs-objet,

d/ analyser l'image, pour y retrouver ces trois points, ainsi que pour relever leurs coordonnées dans le plan de l'image,

e/ définir, à partir de ces coordonnées, deux vecteurs-image correspondant aux deux vecteurs-objet et dont les composantes sont mesurées dans un repère bidimensionnel lié à l'image,

f/ faire correspondre à ces deux vecteurs-image deux vecteurs-observateur, maintenant définis dans un repère tridimensionnel lié à l'observateur et ci-après dénommé repère observateur, chacun des vecteurs-observateur possédant deux composantes proportionnelles aux composantes associées du vecteur-image correspondant, le coefficient de proportionnalité dépendant des facteurs d'échelle respectifs, connus, relatifs à ces deux composantes par rapport à l'objet, ainsi qu'un facteur de distance inconnu, tandis que la troisième composante, inconnue, de chaque vecteur-observateur, est prise selon un axe orienté dans la direction de visée,

g/ à partir de l'égalité entre les modules et produit scalaire des deux vecteurs-observateur et des deux vecteurs-objet respectivement, déterminer sous forme de nombre réel le facteur de distance ainsi que la troisième composante de chacun des deux vecteurs-observateur, afin de définir complètement ces vecteurs-observateur dans l'espace, à une symétriemiroir près,

h/ déterminer les rotations permettant de passer du repèreobjet au repère-observateur, et

i/ en déduire les informations angulaires relatives à l'attitude de l'objet par rapport à l'observateur.

De préférence, l'étape h/ comprend les opérations suivantes:

– h1/ construire numériquement une première matrice carrée d'ordre 3 constituée des composantes des deux vecteurs-observateur ainsi que de leur produit vectoriel dans le repère observateur,

– h2/ déterminer numériquement l'inverse de la première matrice,

– h3/ construire numériquement une seconde matrice carrée d'ordre 3 constituée par les composantes des deux vecteurs-objet, ainsi que celles de leur produit vectoriel dans le repère objet, et

— h4/ déterminer numériquement au moins la troisième ligne de la matrice qui est le produit de l'inverse de la première matrice et de la seconde matrice,

et l'étape i/ consiste à déterminer lesdites informations angulaires à partir d'opérations trigonométriques effectuées sur des éléments de la troisième ligne de la matrice produit.

Selon un autre aspect de l'invention, le procédé comporte en outre l'étape consistant à comparer à l'image de l'objet une silhouette construite à l'aide d'une partie au moins des points du modèle géométrique associé, soumis à une transformation géométrique tenant compte des paramètres d'attitude, du facteur de distance ainsi que des facteurs d'échelle.

La présente invention concerne également un appareillage pour déterminer l'attitude d'un objet dans l'espace à partir d'un poste d'observation occupé par un observateur. L'appareillage proposé comporte:

— un organe de prise de vue, placé au poste d'observation, visant dans la direction de l'objet et fournissant une image sensiblement plane de cet objet,

— une mémoire numérique propre à contenir les coordonnées, dans un repère tridimensionnel lié à l'objet, d'au moins trois points optiquement reconnaissables et non alignés de cet objet, afin de définir un modèle géométrique de l'objet,

— des moyens permettant l'analyse de chaque image délivrée par l'organe de prise de vue, afin d'y retrouver ces trois points optiquement reconnaissables, et de déterminer leurs coordonnées dans le plan de l'image,

— des moyens de traitement de données, propres à effectuer des calculs numériques, vectoriels et matriciels, sur les données mises en mémoire, et agencés pour:

* déterminer à partir des trois points du modèle géométrique deux vecteurs-objet obtenus en reliant deux de ces points au troisième, les composantes de ces vecteurs-objet étant mesurées dans le repère tridimensionnel lié à l'objet et ci-après dénommé repère objet,

* déterminer le module de chacun de ces vecteurs-objet, ainsi que le produit scalaire des deux vecteurs-objet,

* définir à partir des points retrouvés dans l'image les deux vecteurs-image correspondant aux deux vecteurs-objet et dont les composantes sont mesurées dans un repère bidimensionnel lié à l'image,

* faire correspondre à ces deux vecteurs-image deux vecteurs-observateur dans un repère tridimensionnel lié à l'observateur et ci-après dénommé repère observateur, chaque vecteur-observateur étant défini numériquement par deux composantes proportionnelles aux composantes associées du vecteur-image correspondant, le coefficient de proportionnalité dépendant des facteurs d'échelle, connus, intervenant respectivement entre l'objet et l'image selon chacune des composantes, ainsi que d'un facteur de distance inconnu, tandis que la troisième composante, inconnue, de chaque vecteur-observateur, est prise selon un axe orienté dans la direction de visée de l'organe de prise de vue,

* à partir de l'égalité entre les modules et produit scalaire des deux vecteurs-observateur et des deux vecteurs-objet respectivement, déterminer numériquement sous forme de nombre réel le facteur de distance ainsi que la troisième composante de chacun des deux vecteurs-observateur,

* déterminer les relations permettant de passer du repère objet au repère observateur, et

* en déduire les informations angulaires relatives à l'attitude de l'objet.

Comme on le verra plus loin, cet appareil permet en particulier la mise en oeuvre du procédé précité.

D'autres caractéristiques et avantages de l'invention apparaîtront à l'examen de la description détaillée qui va suivre, ainsi que des dessins annexés, sur lesquels:

la figure 1 est le schéma général d'un premier mode de réalisation de l'invention;

la figure 2 est un schéma dans l'espace illustrant comme objet un avion, et définissant le repère "avion", ainsi que le repère "observateur" associé aux moyens de prise de vue,

les figures 3, 3A et 3B constituent un autre schéma dans l'espace illustrant comment l'on peut définir un modèle géométrique d'un objet tel qu'un avion à par tir de trois points;

la figure 4 illustre sous forme schématique d'organigramme la suite des opérations intervenant dans le procédé et le dispositif de l'invention;

la figure 5 illustre de manière détaillée une partie des opérations de la figure 4, en référence à la figure 5A qui rappelle les éléments d'un modèle géométrique de l'objet ou avion;

la figure 6 illustre sous forme plus détaillée une autre partie desdites opérations, en référence à la figure 6A qui illustre schématiquement trois points du modèle, tel que vu sur l'image de l'écran;

la figure 7 illustre en détail une troisième partie des opérations définies généralement sur la figure 4;

la figure 8 illustre une variante du dispositif selon l'invention, sous forme de schéma-bloc général, et

la figure 9 illustre le complément d'opérations effectuées dans le dispositif de variante de la figure 8.

Les éléments des dessins en particulier les opérations écrites ou l'expression des calculs mathématiques, sont à considérer comme incorporés à la présente description pour servir à la définition de l'invention.

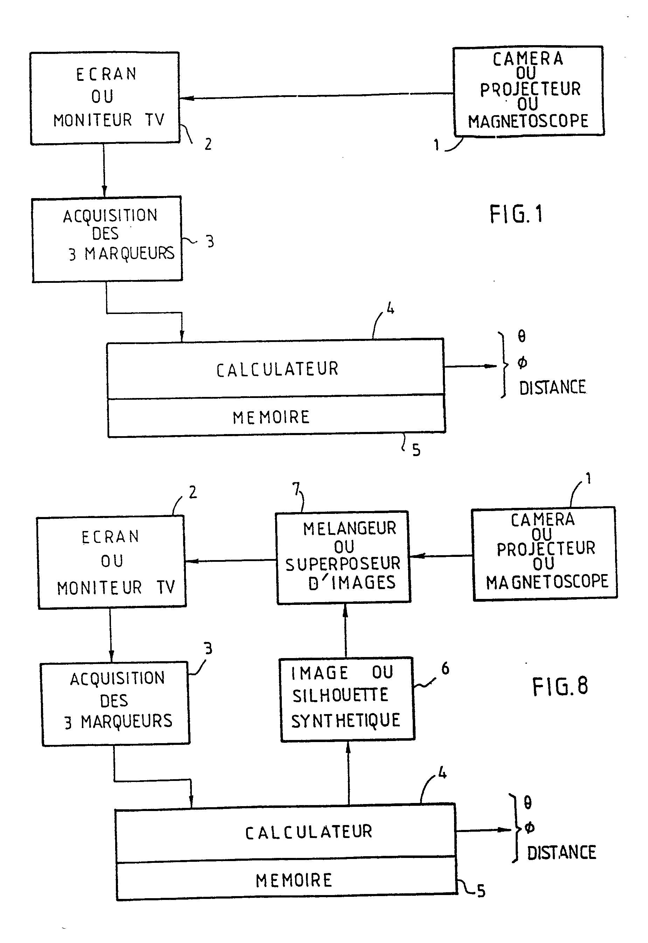

Sur la figure 1,1a référence 1 désigne la partie restitution d'image d'un organe de prise de vue, qui peut être incorporée à l'organe de prise de vue lui-même. L'image est reproduite sur un écran ou un moniteur de télévision référencé 2.

Ainsi, le bloc 1 peut être une caméra-vidéo directement reliée au moniteur de télévision 2. Il peut s'agir d'images enregistrées, auquel cas le bloc 1 est un magnétoscope encore une fois relié au moniteur de télévision 2. Il peut encore s'agir d'images photographiques, obtenues à l'aide d'une caméra photographique, auquel cas le bloc 1 est un projecteur définissant optiquement une image sur un écran de projection classique 2.

Une analyse d'image est faite au niveau du bloc 2. Cette analyse d'image peut, pour partie, faire intervenir un observateur humain. Ainsi, dans le cas d'un moniteur de télévision, l'observateur équipé d'un crayon lecteur peut pointer certains points optiquement reconnaissables de l'objet, tel qu'il les voit sur le moniteur de télévision. C'est ce que schématise le bloc 3, libellé "acquisition des trois marqueurs", puisque la présente invention demande que l'on définisse les positions d'au moins trois points sur l'image, par rapport au repère bidimensionnel associé au plan de l'image.

Dans le cas où le bloc 2 désigne un écran sur lequel l'image est produite optiquement, l'acquisition des trois marqueurs peut se faire par tous moyens connus de visée optiques fine sur l'écran, avec bien entendu l'identification à chaque fois des coordonnées du point visé dans le repère bidimensionnel lié à l'image.

On suppose que les informations délivrées par le bloc d'acquisition des trois marqueurs sont directement disponibles sous forme numérique. Dans le cas contraire, où elles sont initialement sous forme analogique, une conversion analogique/ numérique est effectuée.

Les informations numériques ainsi obtenues sont appliquées à l'entrée d'un calculateur 4, associé à une mémoire 5 et délivrant deux informations angulaires θ et ø et éventuellement une information de distance.

La première étape du procédé selon l'invention réside en l'enregistrement au préalable d'une représentation numérique d'un modèle géométrique de l'objet (on supposera dans la suite qu'il s'agit d'un avion), cette représentation numérique comprenant la mise en mémoire des coordonnées, mesurées dans un repère tridimensionnel lié à l'objet, d'au moins trois points optiquement reconnaissables et non alignés de cet objet. En pratique, il est généralement souhaitable que le modèle géométrique intéresse un nombre de points de l'objet qui soit nettement supérieur à trois.

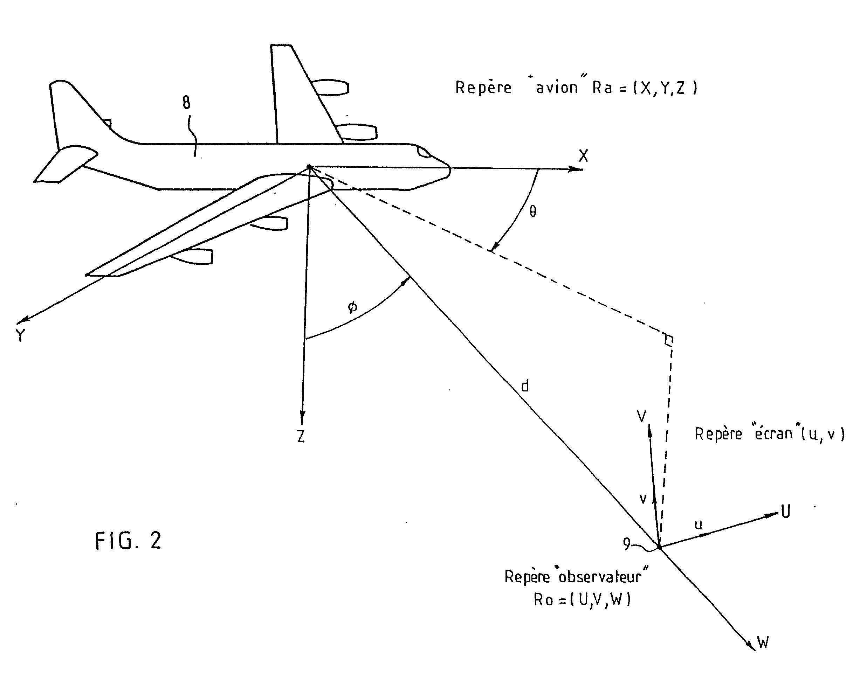

La figure 2 illustre schématiquement un avion 8, auquel peut être associé un repère tridimensionnel noté $R_a$. L'origine de ce repère avion est un point connu, par exemple le centre de l'avion, et le repère est défini par trois axes X, Y et Z, le premier dans l'axe longidutinal de l'avion, le second dans un axe transversal, le troisième dans un axe complétant le trièdre.

La figure 2 montre également un repère observateur $R_0$, défini à partir d'un poste d'observation 9. Le repère observateur $R_0$ possède trois axes de coordonnées, dont deux U et V, perpendiculaires l'un à l'autre, sont pris dans le plan de l'image de l'avion, tel qu'observé. Le troisième axe de coordonnées W est défini par la direction de visée dans le sens de l'avion vers le poste d'observation.

Sur la figure 2, d désigne la distance entre l'origine du repère observateur et l'avion. θ et ø sont respectivement l'azimut et le complément à $\pi/2$ de l'angle de site de l'observateur par rapport au repère avion $R_a$.

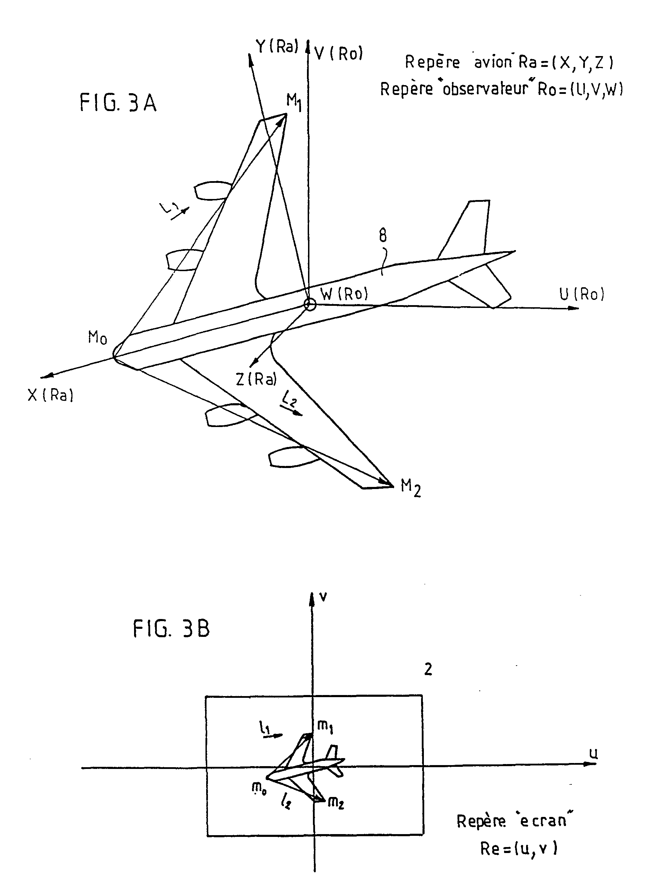

On se reportera maintenant à la figure 3 sur laquelle l'avion 8 est illustré en vue de dessus. Les repères "avion" et "observateur" sont maintenant représentés, ramenés tous deux au même point origine. En partie basse de la figure 3 est illustré le repère écran, noté $R_e$ et défini à partir des deux axes de coordonnées u et v pris à partir d'une origine arbitraire. On note mo, de coordonnées uo et vo, l'image sur l'écran du point Mo qui est pris sur l'extrémité avant de l'aéronef. De même, on note $m_1$ et $m_2$ les images des points $M_1$ et $M_2$, qui sont par exemple situés aux extrémités des ailes. On observe qu'il s'agit là de trois points optiquement reconnaissables de l'avion, et non alignés. Les coordonnées des points $m_1$ et $m_2$ sont respectivement $(u_1, v_1)$ et $(u_2, v_2)$.

Dans le repère avion, aussi bien que dans le repère observateur, on prévoit de définir deux vecteurs-objet, de la manière suivante:

$$\vec{L_1} = \overrightarrow{M_0 M_1} \text{ et } \vec{L_2} = \overrightarrow{M_0 M_2}$$

Il leur correspond sur l'écran deux vecteurs image dans le plan, notés $\vec{i_1} = \overrightarrow{m_0 m_1}$ et $\vec{i_2} = \overrightarrow{m_0 m_2}$

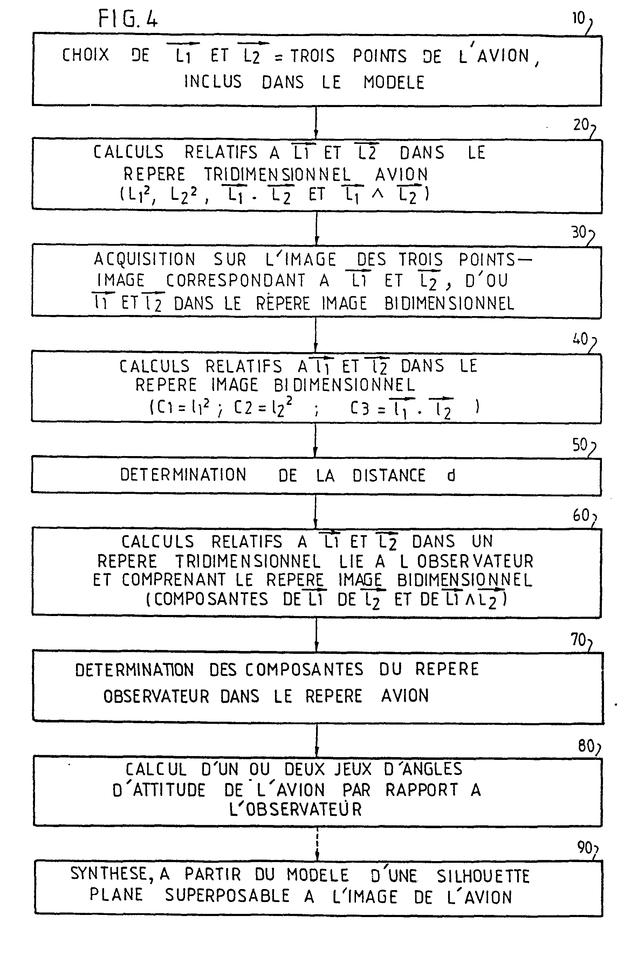

La première étape, 10, du procédé (figure 4) consiste dans le choix de vecteurs $\vec{L_1}$ et $\vec{L_2}$ sur l'avion; il s'agit de choisir trois points de l'avion, optiquement reconnaissables et non alignés. Il est bien entendu requis que ces points, que l'on peut aisément définir à l'avance, fassent l'objet d'une représentation numérique enregistrée préalablement dans la mémoire 5 du calculateur 4.

Pour la définition de cette représentation numérique du modèle géométrique de l'avion, on prend une origine arbitraire, pour repérer dans l'espace tridimensionnel, les points $M_0$, $M_1$ et $M_2$.

Dans le schéma de la figure 4, la modélisation préalable comporte des informations numériques exprimées sous forme de composantes des deux vecteurs $\vec{L_1}$ et $\vec{L_2}$ déterminés à partir des coordonnées de leurs extrémités.

Le calculateur 4 effectue ensuite des calculs relatifs aux vecteurs $\vec{L_1}$ et $\vec{L_2}$ (étape 20 figure 4) dans le repère tridimensionnel relié à l'avion. Ces calculs comportent la détermination du module, ou carré scalaire, de chacun des vecteurs $\vec{L_1}$ et $\vec{L_2}$, du produit scalaire des deux vecteurs $\vec{L_1}.\vec{L_2}$, ainsi que de leur produit vectoriel $\vec{L_1} \wedge \vec{L_2}$. La détermination du produit vectoriel est considérée comme la meilleure manière de mettre en oeuvre la présente invention. Elle n'est cependant pas impérative, car on peut lui trouver des variantes.

L'étape suivante 30 concerne l'acquisition sur l'image des coordonnées des trois points image correspondant à $\vec{L_1}$ et $\vec{L_2}$. Cette étape est effectuée par le bloc d'acquisition des trois marqueurs illustrés en 3 sur la figure 1. Des coordonnées de ces trois points $m_0$, $m_1$ et $m_2$, on peut déduire deux vecteurs $\vec{l_1}$ et $\vec{l_2}$, puis leurs composantes dans le plan image, ou repère image bidimensionnel.

L'étape 40 consiste alors à effectuer des calculs portant sur ces vecteurs $\vec{l_1}$ et $\vec{l_2}$, dans le repère image bidimensionnel. Plus précisément, on calcule trois grandeurs numériques $C_1$, $C_2$ et $C_3$. $C_1$ et $C_2$ sont respectivement proportionnelles (par les facteurs d'échelle connus $k_u$, $k_v$) aux carrés scalaires des deux vecteurs plans $\vec{l_1}$ et $\vec{l_2}$, tandis que $C_3$ est proportionnelle à leur produit scalaire.

Comme on le verra plus loin, on peut alors mettre en oeuvre une étape 50, qui consiste en la détermination de la distance d entre le point d'observation et l'avion. On admet alors que d est grand par rapport aux dimensions de l'avion, c'est-à-dire que la distance est la même, au premier ordre, pour tous les points de l'avion.

L'étape 60 effectue des calculs relatifs aux vecteurs $\vec{L_1}$ et $\vec{L_2}$ dans un repère tridimensionnel lié à l'observateur, et comprenant le repère image bidimensionnel.

Ces calculs consistent en la détermination des composantes, dans ce repère observateur, du vecteur $\vec{L_1}$, du vecteur $\vec{L_2}$, et du produit vectoriel $\vec{L_1} \wedge \vec{L_2}$.

L'étape 70 consiste en la détermination des rotations qui permettent de passer du repère avion au repère observateur. Cette étape revient à déterminer les composantes des vecteurs unitaires du repère observateur dans le repère avion. Compte tenu de la symétrie miroir qui est possible par rapport à l'image, il existe deux solutions. Cependant, en certaines applications, on disposera à l'avance d'informations permettant de lever l'ambiguïté entre ces deux solutions.

L'étape suivante 80 consiste alors en le calcul d'un ou deux jeux d'angles d'attitude de l'avion par rapport à l'observateur (le nombre de jeux d'angles dépend du fait que l'ambiguïté a été levée ou non).

Ces angles d'attitude, qui sont l'azimut et le complément à $\pi/2$ du site $\theta$ et $\phi$ illustrés sur la figure 2 se déduisent de manière simple, une fois que la ou les solutions de l'étape 70 ont été déterminées.

Enfin, dans une variante de réalisation de l'invention, on procède également à une étape 90 qui consiste en la synthèse à partir du modèle de l'avion enregistré, d'une silhouette plane superposable à l'image de l'avion. Bien que cela puisse se faire seulement à partir de trois points, il est bien préférable que le modèle utilise un nombre de points nettement supérieur à trois, pour accentuer le caractère réaliste de la silhouette.

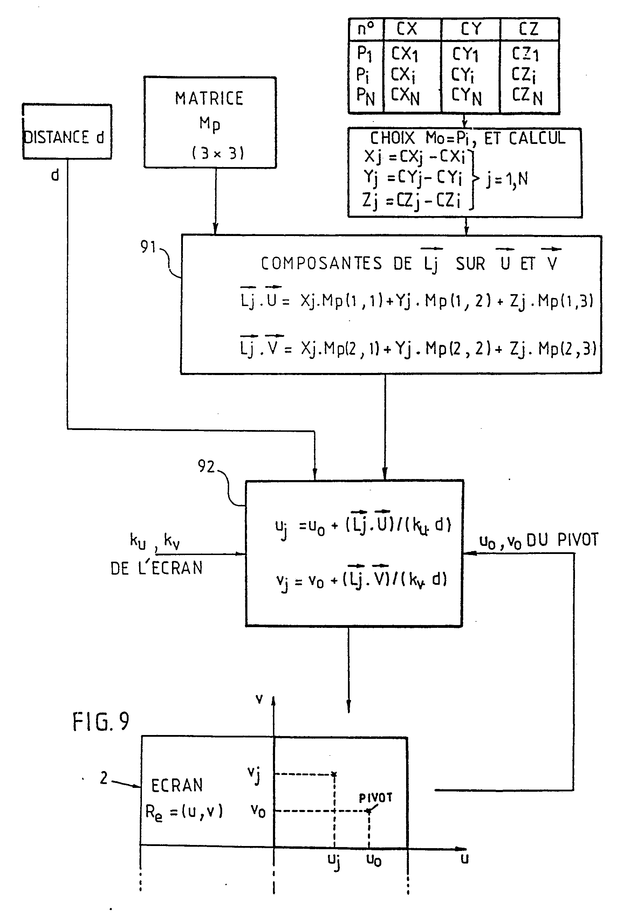

La synthèse de la silhouette correspond alors à la projection de l'ensemble des vecteurs du modèle enregistré, dans le plan U, V du repère observateur d'où des informations numériques définissant les positions des points de la silhouette dans une image telle que donnée par l'écran. Ces informations numériques sont appliquées au bloc 6 de la figure 8, qui leur fait subir un traitement convenable pour permettre leur application à un mélangeur ou superposeur d'image illustré schématiquement en 7, et interposé entre le bloc 1 et le bloc 2 de la figure 8. Les autres blocs de la figure 8 sont semblables à ceux de la figure 1.

Dans le cas où la liaison entre les blocs 1 et 2 de la figure 8 est une liaison de signaux vidéo, on utilisera pour le bloc 7 un mélangeur vidéo classique. Dans le cas où une image optique est projetée depuis le projecteur 1 sur un écran 2, on peut placer par exemple un écran semi-transparent, auquel cas le bloc 6 devient un générateur de points lumineux en position prédéterminée, dont la structure peut être semblable à celle du dispositif d'acquisition de trois marqueurs en réalisation optique.

On décrira maintenant un exemple particulier de l'invention pour lequel un objet est un avion en vol, et la caméra et l'écran sont de télévision.

La première étape du procédé selon l'invention consiste à enregistrer au préalable, dans la mémoire 5 (figure 1 ou 8), une représentation numérique d'un modèle géométrique de l'avion. Cette représentation numérique comprend les positions dans l'espace d'au moins trois points optiquement reconnaissables de l'avion, et non alignés. En pratique, on prend N points représentatifs $P_i$ avec N de l'ordre de quelques dizaines pour un avion. Ces N points sont choisis de manière à modéliser, au mieux, l'avion. La représentation numérique des positions des N points dans l'espace peut se faire à l'aide des coordonnées des points, pris relativement à une origine arbitraire, mais dans un repère avion géométrique direct et trirectangle qui soit en rapport avec son attitude. Par exemple:

X   est l'axe longitudinal,
Y   est un axe transversal dans la direction des ailes vers la droite,
Z   complète le trièdre.

La modélisation de l'avion peut être pratiquée de différentes manières connues, notamment par points individuels, ou encore par segments ou formes élémentaires (cône, sphère, triangle, ellipsoïde ...).

Le modèle géométrique ainsi enregistré est ramené à la définition des coordonnées $CX_1$,

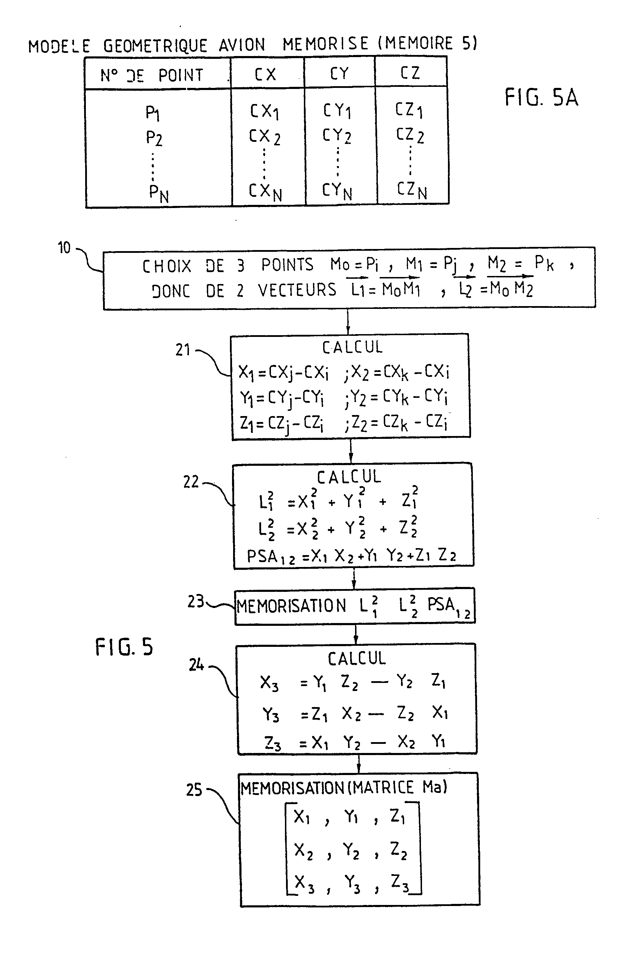

CY$_1$, CZ$_1$ à CX$_N$, CY$_N$, CZ$_N$ des points P$_l$ comme le montre la figure 5A.

La figure 5 rappelle que la première étape du procédé consiste en le choix de trois points du modèle M$_0$ = P$_l$, M$_1$ = P$_j$ M$_z$ = P$_k$, c'est-à-dire deux vecteurs $\vec{L_1}$ = $\overrightarrow{M_0M_1}$ et $\vec{L_2}$ = $\overrightarrow{M_0M_2}$.

La suite des opérations illustrées sur la figure 5 consistent en une décomposition de l'étape 20 de la figure 4, donnée à titre d'exemple.

Ainsi, les opérations 21 consistent en un calcul des composantes X$_1$, Y$_1$, Z$_1$ et X$_2$, Y$_2$, Z$_2$ des vecteurs $\vec{L_1}$ et $\vec{L_2}$. Les opérations 22 sont le calcul des carrés des modules de chacun des vecteurs L$_1$ et L$_2$, carrés scalaires qui sont notés L$_1^2$ et L$_2^2$, ainsi que du produit scalaire PSA$_{12}$ des mêmes vecteurs $\vec{L_1}$ et $\vec{L_2}$. Ces calculs sont effectués à partir des composantes de ces vecteurs dans le repère avion. Leur expression mathématique est donnée à l'intérieur du bloc 22 de la figure 5.

L'opération suivante, notée 23, es une mémorisation des valeurs numériques des grandeurs L$_1^2$, L$_2^2$ et PSA$_{12}$, qui seront utilisées ultérieurement dans cet exemple.

Ensuite, l'opération 24 est le calcul, toujours dans le repère avion, des composantes X$_3$, Y$_3$ et Z$_3$ du produit vectoriel $\vec{L_1}$ et $\vec{L_2}$. Là encore, l'expression de ces composantes en fonction de celles des vecteurs $\vec{L_1}$ et $\vec{L_2}$ est donnée dans le bloc 24 de la figure 5.

Il est alors possible d'enregistrer en mémoire (opération 25), en tant que matrice M$_a$, des valeurs numériques rangées X$_1$, Y$_1$, Z$_1$ sur la première ligne, X$_2$, Y$_2$, Z$_2$ sur la seconde ligne et X$_3$, Y$_3$, Z$_3$ sur la troisième ligne de la matrice M$_a$.

Pour certaines applications, lorsque l'un des points est privilégié, parce qu'étant toujours visible (par exemple M$_0$) les grandeurs mémorisées aux opérations 23 et 25 sont entièrement déterminables à l'avance, pour le couple de vecteurs $\vec{L_1}$ et $\vec{L_2}$ choisi, et par conséquent pour tout couple de vecteurs que l'on peut extraire de l'ensemble de vecteurs $\vec{L_1}$ à $\vec{L_K}$. En conséquence, une variante de la présente invention consisterait à enregistrer en mémoire les carres scalaires de chacun des vecteurs $\vec{L_1}$ à $\vec{L_K}$, les produits scalaires de chaque paire que l'on peut construire à partir de ces vecteurs, de même que leurs produits vectoriels, et enfin une grande matrice d'où l'on pourrait extraire, suivant les besoins, la matrice M$_a$ correspondant au couple de vecteurs particulier à prendre en considération.

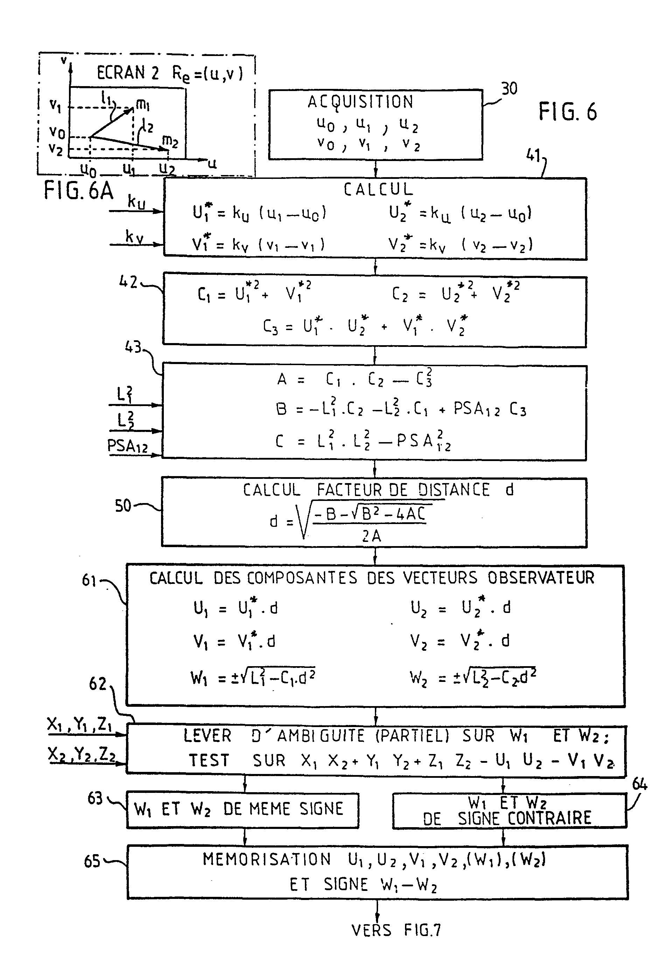

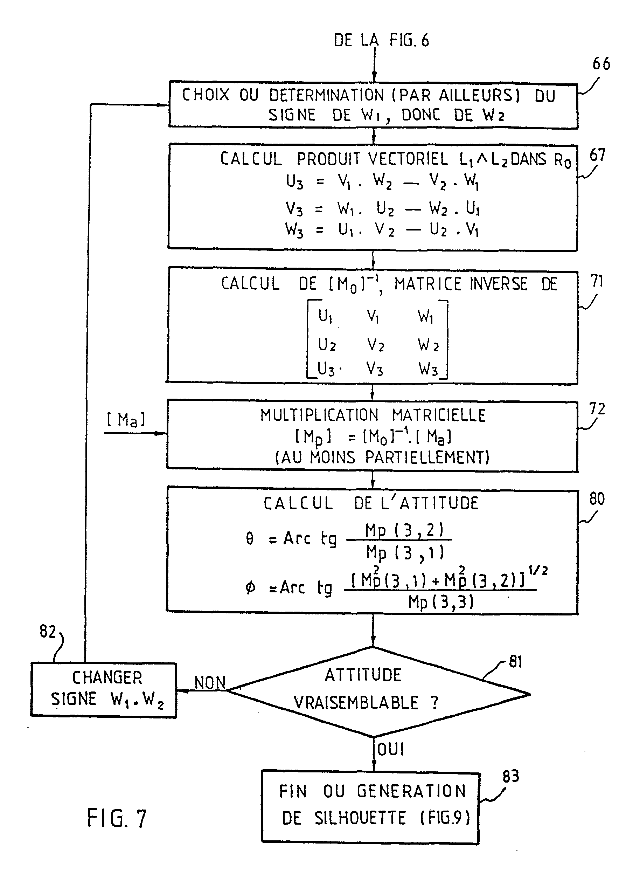

La figure 6A rappelle comment on peut déterminer les coordonnées respectives des trois points m$_0$, m$_1$ et m$_2$ sur l'écran 2, dans le repère écran dont les axes sont u et v. On rapprochera cette figure 6A de la partie basse de la figure 3.

Sur la figure 6A est illustrée l'étape 30, consistant en l'acquisition sur l'image des trois points image correspondant aux vecteurs $\vec{L_1}$ et $\vec{L_2}$. Les coordonnées des points dans le repère image bidimensionnel sont de la forme m$_0$ (u$_0$, v$_0$). On définit ainsi, sur l'écran, deux vecteurs l$_1$ = $\overrightarrow{m_0m_1}$ et l$_2$ = $\overrightarrow{m_0m_2}$, qui sont les images respectives de $\vec{L_1}$ et $\vec{L_2}$.

Quelle qu'en soit la nature, le système de prise de vue et de reproduction d'image possède des facteurs d'échelle et de grandissement que l'on note K$_u$ selon l'axe de coordonnées u, et K$_v$ selon l'axe de coordonnées v. Ces facteurs d'échelle sont connus à l'avance et également inscrits dans la mémoire 5 des figures 1 ou 8.

L'étape 40 de la figure 4 prend alors en compte les rapports K$_u$ et K$_v$ respectivement dans la direction des axes de coordonnées u et v.

L'opération 41 de la figure 6 consiste en le calcul des composantes U$_1$* et V$_1$* ainsi U$_2$* et V$_2$* que l'on associe de la sorte aux vecteurs-image.

De la même manière, l'opération suivante 42 est un calcul des carrés scalaires C$_1$ et C$_2$ des deux vecteurs-image à partir de leurs composantes (U$_1$*, V$_1$*) et (U$_2$*, V$_2$*), ainsi que du produit scalaire C$_3$ des mêmes vecteurs.

A ce niveau, dans la version décrite de l'étape générale 40, on fait correspondre aux vecteurs-image, deux vecteurs-observateur, qui, au lieu d'être définis dans le repère bidimensionnel lié à l'image, ou dans un repère bidimensionnel obtenu par affinité orthogonale à partir de celui-ci, sont maintenant définis dans un repère tridimensionnel lié à l'observateur. Chacun des vecteurs-observateur possède deux composantes proportionnelles aux composantes associées du vecteur-image correspondant (pris ici comme étant $\vec{l_1}$ et $\vec{l_2}$). Le coefficient de proportionnalité dépend des facteurs d'échelle respectifs, connus, notés K$_u$ et K$_v$, et relatifs à ces deux composantes par rapport à l'objet. Il s'y ajoute la distance inconnue que l'on note d. La troisième composante, encore inconnue, de chaque vecteur-observateur, est prise selon l'axe $\overrightarrow{W}$ orienté dans la direction de visée (figure 2).

La correspondance que l'on établit ainsi peut être simplement implicite. On observe en effet qu'elle n'apparaît pas dans les opérations 41 et 42.

L'opération 43 fait intervenir le calcul de trois grandeurs A, B et C, à partir des grandeurs C$_1$ à C$_3$ qui viennent d'être calculées, ainsi qu'à partir des carrés scalaires et produit scalaire précédemment calculés lors de l'opération 22 (figure 5). Ces grandeurs L$_1^2$, L$_2^2$ et PSA$_{12}$ sont indiquées comme entrées en partie gauche du bloc 43, qui donne l'expression particulière du calcul des grandeurs A, B et C.

On peut alors (opération 50) déterminer le facteur de distance d, selon la formule qui s'y trouve inscrite.

L'homme de l'art reconnaîtra en cette formule l'expression de l'une des solutions d'une équation bicarrée en d qui serait donc de la forme:

$$A.d^4 + B.d^2 + C = O \qquad (I)$$

A cet égard, l'examen des relations indiquées dans les blocs 42 et 43 montre bien que B est systématiquement une grandeur négative, et que par conséquent - B, positif, est nécessairement supérieur au déterminant $\sqrt{B^2-4AC}$..

L'autre solution concernant le facteur de distance d, dans lequel on mettrait le signe + devant le déterminant $\sqrt{B^2-4AC}$, ne convient pas, car elle correspondrait à des valeurs en nombres complexes des troisièmes composantes $W_1$ et $W_2$ des vecteurs-observateur précités.

Connaissant alors la distance d, il devient possible de calculer les composantes des vecteurs-observateur dans le repère observateur, en d'autres termes d'effectuer des calculs relatifs aux vecteurs $\overrightarrow{L_1}$ et $\overrightarrow{L_2}$ dans le repère tridimensionnel lié à l'observateur. On calcule tout d'abord les composantes de ces vecteurs-observateur, à savoir, $U_1$, $V_1$, $W_1$ pour $\overrightarrow{L_1}$, et $U_2$, $V_2$, $W_2$ pour $\overrightarrow{L_2}$.

Comme les composantes selon U et V sont tirées de celles du repère image bidimensionnel, il suffit de multiplier par exemple la composante $U_1{}^*$ par le facteur de distance d pour obtenir la composante $U_1$. Cette façon de faire est illustrée à l'intérieur du bloc 61 de la figure 6. On rappelle à cet égard que les facteurs d'échelles $K_u$ et $K_v$ sont déjà inclus respectivement dans les composantes selon U et V.

Les troisièmes composantes $W_1$ et $W_2$ sont à leur tour calculées selon les relations indiquées dans le bloc 61, étant observé que leur signe est encore inconnu. Il en résulterait normalement quatre possibilités.

Il faut à ce niveau exposer que l'équation bicarrée en d (relation mathématique (1)), de même que l'expression de la troisième composante ($W_1$; $W_2$) de chacun des deux vecteurs-observateur, sont obtenues à partir des observations suivantes:

— les modules, et par conséquent les carrés scalaires des deux vecteurs $\overrightarrow{L_1}$ et $\overrightarrow{L_2}$ sont les mêmes dans le repère avion et dans le repère observateur;
— le produit scalaire des deux vecteurs $\overrightarrow{L_1}$ et $\overrightarrow{L_2}$ est également le même dans ces deux repères. Ce produit scalaire ne diffère de celui des deux vecteurs $\overrightarrow{T_1}$ et $\overrightarrow{T_2}$, dans le repère écran ou image, que par la contribution des troisièmes composantes $W_1$ et $W_2$ (abstraction faite des facteurs de proportionnalité sur les deux premières composantes).

Par élimination de $W_1{}^2$ et $W_2{}^2$ entre les trois relations ainsi obtenues à partir de ces égalités, on trouve l'expression du facteur de distance telle qu'elle est donnée à l'intérieur du bloc 50 de la figure 6. On en déduit alors les expressions de $W_1$ et $W_2$ telles que données à l'intérieur du bloc 61 de la même figure 6.

Un lever d'ambiguïté partiel sur $W_1$ et $W_2$ est opéré (62) en faisant la différence entre le produit scalaire $PSA_{12}$ des vecteurs $\overrightarrow{L_1}$ et $\overrightarrow{L_2}$ dans le repère avion, et le produit scalaire maintenant connu des mêmes vecteurs dans la partie bidimensionnelle (U, V) du repère observateur, pour déterminer le signe du produit $W_1.W_2$. Suivant la valeur de ce produit, dont la relation de calcul est donnée à l'intérieur du bloc 62, on détermine à l'opération 63 ou à l'opération 64 que

$W_1$ et $W_2$ sont de même signe, ou bien de signe contraire, respectivement.

L'opération 65 peut alors intervenir, sous la forme d'un enregistrement dans la mémoire 5 des coordonnées $U_1$, $U_2$, $V_1$, $V_2$, module de $W_1$, module de $W_2$, et du signe du produit $W_1.W_2$.

Après cette mémorisation, les vecteurs-observateur sont presque complètement définis dans l'espace, sous réserve d'une symétrie miroir autour du plan défini par les axes U et V, c'est-à-dire sur la figure 3, d'un plan parallèle à l'écran et passant par le point $M_0$.

A ce stade, il est possible de choisir en connaissance de cause le signe de $W_1$ et celui de $W_2$, par exemple en vérifiant la continuité d'attitude d'une image à l'autre. En l'absence de telles informations, on fait une première hypothèse sur le signe de $W_1$, donc de $W_2$. C'est ce que matérialise le bloc 66 de la figure 7. Comme on le verra in fine, si cette première hypothèse n'est pas vérifiée, on change le signe, et l'ensemble des opérations 67 à 80 de la figure 7 sont répétées.

Une fois que les signes $W_1$ et $W_2$ ont été choisis ou déterminés, intervient l'opération 67 qui réside en le calcul des composantes $U_3$, $V_3$ et $W_3$ du produit vectoriel $\overrightarrow{L_1} \wedge \overrightarrow{L_2}$, cette fois dans le repère observateur $R_0$. L'expression classique de ces composantes figure à l'intérieur du bloc 67.

On peut alors construire une matrice notée $M_0$, carrée d'ordre 3, et dont les lignes sont respectivement constituées des composantes de $\overrightarrow{L_1}$, $\overrightarrow{L_2}$, ainsi que de leur produit vectoriel dans le repère observateur. Cette matrice est écrite à l'intérieur du bloc 71.

Ce bloc marque le début de l'étape de détermination des composantes des axes du repère observateur dans le repère avion, notée 70 sur la figure 4.

L'étape 71, à partir de la matrice $M_0$, détermine l'inverse 10 de cette matrice carrée d'ordre 3, lequel inverse est noté $[M_0]^{-1}$.

Après cela, l'opération 72 retrouve en mémoire la matrice $M_a$ puis effectue le produit de la matrice inverse de $M_0$ par la matrice $M_a$.

Cette matrice $M_p$ définit entièrement la transformation géométrique qui permet, par deux rotations successives, de passer du repère avion au repère observateur.

Pour les seuls besoins de la détermination d'attitude, il suffit de calculer une partie de la matrice produit $M_p$.

En effet, l'étape 80 des figures 4 et 7 effectue le calcul de l'attitude, à savoir des angles $\theta$ et $\emptyset$ à partir des éléments de la matrice qui sont mentionnés à l'intérieur du bloc 80. Pour noter chacun de ces éléments, le symbole de la matrice $M_p$ est suivi de parenthèses dans lesquelles le premier chiffre illustre la ligne où se trouve l'élément, et le second chiffre la colonne où se trouve l'élément.

Il est prévu ensuite, dans l'exemple décrit sur la figure 7, une opération de test 81 consistant à déterminer si l'attitude de l'avion trouvée est vraisemblable. Lors des cas comme celui d'un aéronef, l'homme de l'art sait en effet, à partir de la trajectoire de l'avion, déterminer si l'attitude de celui-ci est vraisemblable ou non. Si elle ne l'est pas, il peut alors produire au niveau de l'opération 82 un ordre de changement du signe de $W_1$ et par conséquent de $W_2$, qui est suivi d'un retour à l'opération 66.

Dans le cas où l'attitude est vraisemblable, on peut passer à la génération de silhouette qui fait intervenir les moyens matériels de la figure 8, et les opérations illustrées sur la figure 9. On notera au passage que la génération de silhouette peut contribuer à la détermination de la vraisemblance de l'attitude de l'avion. En ce cas, les opérations de test 81 et 82 pourraient être reportées à la fin du schéma de la figure 9.

En partie haute de la figure 9 sont rappelés les éléments de base de cette génération de silhouette. Ces éléments de base comprennent tout d'abord la valeur numérique du facteur de distance d, ensuite la valeur numérique de chacun des neuf éléments de la matrice carrée d'ordre 3 $M_p$, et enfin les valeurs numériques des composantes de vecteurs de base $\vec{L_j}$ (avec j variant de 1 à N), telles qu'enregistrées dans le modèle géométrique numérique de l'aéronef, ou que tirées de celui-ci par les relations définies à l'étape 21 (figure 5): $L_j = \overrightarrow{P_iP_j}$ où $P_i = M_o$ est l'un des trois points choisis.

Sont également utilisées les coordonnées ($u_o$, $v_o$) du point $m_o$ image de $M_o$ qui servira ici de pivot pour l'illustration des différents autres points de la silhouette.

La première étape 91 de la généralisation de la silhouette consiste en la détermination des composantes de chacun des vecteurs $\vec{L_j}$ selon les axes U et V. Pour cela, on construit à chaque fois le produit scalaire $\vec{L_j}.\vec{U}$ et $\vec{L_j}.\vec{V}$, à partir des expressions figurant dans le bloc 91, et selon les notations déjà définies en ce qui concerne les éléments de la matrice $M_p$.

Il reste alors (étape 92) à déterminer les coordonnées $u_j$ et $v_j$ de chacun des points de la silhouette, à partir du pivot ($u_o$, $v_o$) en divisant à chaque fois le produit scalaire concerné par le facteur de distance d, et le facteur d'échelle $k_u$ ou $k_v$ concerné. Les relations exactes sont écrites à l'intérieur du bloc 92.

Les informations numériques $u_j$ et $v_j$ ainsi obtenues à chaque fois sont alors appliquées comme signal de commande pour produire des points aux emplacements correspondants sur l'écran du tube cathodique du moniteur de télévision. Le bas de la figure 9 illustre ceci, sur la base du point pivot ($u_o$, $v_o$), et de l'un ($u_j$, $v_j$) des points de la silhouette. La silhouette se trouve ainsi ramenée de manière précise aux dimensions du repère écran $R_e = (u, v)$.

Dans le cas de la télévision, l'incrustation des points de la silhouette dans la trame, aux lignes et aux emplacements définis par les valeurs numériques issues du calculateur, peut se faire à l'aide d'un interface électronique comprenant une horloge, des compteurs, et des registres tampons, ou encore par une carte d'interface entre un calculateur et un moniteur de télévision, de telles cartes étant disponibles dans le commerce, et pouvant être associées à un mélangeur de de signaux de télévision.

Un calculateur capable de fonction élémentaire de calculs numériques, vectoriels et matriciels, en coopération avec une mémoire de taille raisonnable, permet d'effectuer l'ensemble des opérations qui viennent d'être décrites, en liaison naturellement avec l'organe de prise de vue, et les moyens d'acquisition des marqueurs.

Une solution plus sophistiquée consiste à numériser dès l'origine les signaux de luminance issus de la caméra de télévision, à en faire faire directement l'acquisition par le calculateur, qui peut alors déterminer lui-même les marqueurs par les techniques connues d'analyse d'image, en faire l'acquisition, tel que définie à l'étape 30 de la figure 4, et poursuivre ensuite les autres opérations jusques et y compris la génération de la silhouette. Un simple oscilloscope peut alors recevoir à travers un interface numérique/analogique d'une part l'image numérisée telle que définie par la caméra, et d'autre part la silhouette synthétique telle que produite par le calculateur.

Bien entendu, la silhouette n'a pas nécessairement à être superposée ou incorporée à l'image initialement obtenue à partir de l'organe de prise de vue. Cela s'applique notamment à la version optique de projection en 1 d'une image sur l'écran. La silhouette engendrée peut alors être visualisée sur un autre support que l'écran recevant l'image réelle de l'avion. Cet autre support peut d'ailleurs être un écran électronique, à savoir un oscilloscope ou moniteur de télévision placé à côté de l'écran optique.

En engendrant ainsi une silhouette de l'avion, on constatera des différences entre l'image réelle et la silhouette. Ces différences peuvent être attribuées à une mauvaise reconstruction des grandeurs d'attitude et de distance. Il faut alors recommander le choix des positions des marqueurs, c'est-à-dire le choix initial des vecteurs $\vec{L_j}$ à l'étape 10 de la figure 4.

Ces différences peuvent tenir aussi à une modélisation imparfaite ou incomplète de la cible. Elles peuvent alors, après obtention d'un nombre suffisant d'informations sur différentes paires de vecteurs comme $\vec{L_1}$, $\vec{L_2}$, être mises à profit pour enrichir le modèle de connaissance de la cible.

Elles peuvent encore tenir à des déformations de la cible par rapport au modèle rigide. Le procédé et le dispositif de l'invention servent alors à étudier les déformations d'une structure en fonction de contraintes de fonctionnement. Cette application concerne notamment les essais en vol et les mesures sur maquettes en souffleries aérodynamiques.

Une autre application selon l'invention réside en la visualisation de silhouettes dites longitudinales. Il est en effet utile, pour certains problèmes d'imagerie, d'obtenir une silhouette de la cible dans un plan contenant la direction d'observation $\vec{W}$, et un vecteur $\vec{T}$ choisi par l'utilisateur (ou d'obtenir une famille de telles silhouettes).

Grâce à la reconstitution d'attitude, cette silhouette peut être engendrée par exemple dans le plan $R_e$ de l'écran, d'après les relations:

$$u_j = k. \overrightarrow{L_j}. \overrightarrow{W}$$

$$v_j = k. \overrightarrow{L_j}. (\overrightarrow{W} \wedge (\overrightarrow{T} \wedge \overrightarrow{W}))_j = 1,$$

N k facteur d'échelle le vecteur $\overrightarrow{W}$ ayant pour composantes $M_p(3,1)$, $M_p(3,2)$, $M_p(3,3)$.

La simplicité de ces relations est telle qu'elles peuvent être aisément prises en compte par le même calculateur que précédemment. L'utilisateur peut choisir autant de vecteurs $\overrightarrow{T}$ qui lui convient, ce qui définit bien sûr une famille de silhouettes longitudinales.

La visualisation de cette silhouette ou de cette famille de silhouettes longitudinales se fait aisément sur un écran, en adoptant l'un des moyens proposés ci-dessus, étant observé que le problème de superposition avec l'image d'origine ne se pose pas.

Les expérimentations menées par le Demandeur ont montré que, d'une manière générale, lorsque l'image de l'avion présente une surface relative suffisante par rapport à celle de l'écran (à savoir au moins quelques %, ce qui fait intervenir les dimensions de l'avion, la distance, le grossissement, et les conditions de visibilité), la précision des résultats est de l'ordre de 1 % en distance et de 1° en attitude.

Bien entendu, des procédures statistiques notamment de lissage/filtrage sur l'ensemble des mesures permettront d'améliorer substantiellement la précision des résultats.

## Revendications

1. Procédé pour déterminer à l'aide d'un appareillage l'attitude d'un objet (8) dans l'espace, par rapport à un poste d'observation (1) occupé par un observateur, à partir d'une image (2) sensiblement plane de cet objet (8), prise du poste d'observation (1), caractérisé par les étapes consistant à:

a/ enregistrer, au préalable, une représentation numérique d'un modèle géométrique de l'objet (8), cette représentation numérique comprenant la mise en mémoire (5) des coordonnées mesurées dans un repère tridimensionnel lié à l'objet (8) et ci-après dénommé repère objet, d'au moins trois points ($M_0$, $M_1$, $M_2$) de l'objet optiquement reconnaissables et non alignés,

b/ définir (10) à partir de cette représentation numérique au moins deux vecteurs-objet obtenus en reliant deux de ces points au troisième, et dont les composantes sont mesurées dans le repère objet,

c/ déterminer (20) le module de chacun de ces vecteurs-objet, ainsi que le produit scalaire des deux vecteurs-objet,

d/ analyser (30) l'image (2), pour y retrouver ces trois points ($M_0$, $M_1$, $M_2$), ainsi que pour relever leurs coordonnées dans le plan de l'image (2),

e/ définir (40), à partir de ces coordonnées deux vecteurs-image correspondant aux deux vecteurs-objet et dont les composantes sont mesurées dans un repère bidimensionnel lié à l'image (2),

f/ faire correspondre à ces deux vecteurs-image deux vecteurs-observateur, définis dans un repère tridimensionnel lié à l'observateur (1) et ci-après dénommé repère observateur, chacun des vecteurs-observateur possédant deux composantes proportionnelles aux composantes associées du vecteur-image correspondant, le coefficient de proportionnalité dépendant des facteurs d'échelle respectifs, connus, relatifs à ces deux composantes par rapport à l'objet (8), ainsi qu'un facteur de distance inconnu (d) entre l'objet et l'observateur (1), tandis que la troisième composante, inconnue, de chaque vecteur-observateur, est prise selon un axe orienté dans la direction de visée,

g/ à partir de l'égalité entre les modules et produit scalaire des deux vecteurs-observateur et des deux vecteurs-objet respectivement, déterminer (50) sous forme de nombre réel le facteur de distance (d) ainsi que la troisième composante de chacun des deux vecteurs-observateur, afin de définir complètement ces vecteurs-observateur dans l'espace à une symétrie-miroir près,

h/ déterminer (70) les rotations permettant de passer du repère objet au repère observateur, et

i/ en déduire (80) les informations angulaires relatives à l'attitude de l'objet par rapport à l'observateur (1).

2. Procédé selon la revendication 1, caractérisé en ce que l'étape h/ comprend les opérations suivantes :

h1/ construire numériquement une première matrice carrée d'ordre 3 constituée par les composantes des deux vecteurs-observateur ainsi que celles de leur produit vectoriel dans le repère observateur,

h2/ déterminer (71) numériquement l'inverse de la première matrice,

h3/ construire (25) numériquement une seconde matrice carrée d'ordre 3 constituée des composantes des deux vecteurs-objet ainsi que de leur produit vectoriel dans le repère objet, et

h4/ déterminer (72) numériquement au moins la troisième ligne de la matrice qui est le produit de l'inverse de la première matrice et de la seconde matrice,

et en ce que l'étape i/ consiste à déterminer (80) lesdites informations angulaires à partir d'opérations trigonométriques effectuées sur des éléments de la troisième ligne de la matrice produit.

3. Procédé selon l'une des revendications 1 et 2, caractérisé en ce que l'étape h/ consiste à déterminer les rotations permettant de passer du repère objet au repère observateur, et à lever l'ambiguïté entre les-deux attitudes qui en résultent.

4. Procédé selon l'une des revendications 1 à 3, caractérisé en ce que l'étape a/ consiste à enregistrer une représentation numérique intéressant un nombre de points de l'objet (8) nettement supérieur à 3, et en ce que l'étape b/ comprend la sélection d'au moins trois des points de cette représentation pour la construction d'au moins deux vecteurs-objet.

5. Procédé selon la revendication 4, caractérisé en ce qu'il comporte en outre l'étape (90) consistant à comparer à l'image (2) de l'objet (8) une silhouette construite à l'aide d'une partie au moins des points du modèle géométrique associé, soumis à une transformation géométrique tenant compte des paramètres d'attitude, du facteur de distance (d) ainsi que des facteurs d'échelle.

6. Procédé selon la revendication 5, caractérisé en ce qu'à partir des différences entre l'image réelle et la silhouette qui lui est comparée, on affine le choix des points sélectionnés pour construire les deux vecteurs-objet, ou bien la modélisation de ces points, les opérations effectuées lors des étapes b/ à i/ étant répétées avec différents jeux de trois points prélevés à chaque fois dans la représentation numérique qui constitue le modèle géométrique de l'objet (8).

7. Appareillage pour déterminer l'attitude d'un objet (8) dans l'espace par rapport à un poste d'observation occupé par un observateur, caractérisé en ce qu'il comporte:

- un organe de prise de vue (1), placé au poste d'observation visant dans la direction de l'objet (8) et fournissant une image sensiblement plane (2) de cet objet (8),
- une mémoire numérique (5) propre à contenir les coordonnées, mesurées dans un repère tridimensionnel lié à l'objet (8), d'au moins trois points ($M_0$, $M_1$, $M_2$) optiquement reconnaissables et non alignés de cet objet, afin de définir un modèle géométrique de l'objet (8),
- des moyens (3) permettant l'analyse de chaque image délivrée par l'organe de prise de vue, afin d'y retrouver ces trois points ($M_0$, $M_1$, $M_2$) optiquement reconnaissables, et de déterminer leurs coordonnées dans le plan de l'image (2),
- des moyens (4) de traitement de données, propres à effectuer des calculs numériques, vectoriels et matriciels, sur les données mises en mémoire, et agencés pour:

  * déterminer (10) à partir des trois points du modèle géométrique deux vecteurs-objet obtenus en reliant deux de ces points au troisième, les composantes de ces vecteurs-objet étant mesurées dans le repère tridimensionnel lié à l'objet (8), et ci-après dénommé repère objet,
  * déterminer (20) le module de chacun de ces vecteurs-objet, ainsi que le produit scalaire des deux vecteurs-objet,
  * définir (40) à partir des points retrouvés dans l'image (2) les deux vecteurs-image correspondant aux deux vecteurs-objet et dont les composantes sont mesurées dans un repère bidimensionnel lié à l'image (2),
  * faire correspondre à ces deux vecteurs-image deux vecteurs-observateur dans un repère tridimensionnel lié à l'observateur (1) et ci-après dénommé repère observateur, chaque vecteur-observateur étant défini numériquement par deux composantes proportionnelles aux composantes associées du vecteur-image correspondant, le coefficient de proportionnalité dépendant des facteurs d'échelle, connus, intervenant respectivement entre l'objet (8) et l'image (2) selon chacune des composantes, ainsi que d'un facteur de distance (d) inconnu, tandis que la troisième composante, inconnue, de chaque vecteur-observateur, est prise selon un axe orienté dans la direction de visée de l'organe de prise de vue,
  * à partir de l'égalité entre les modules et produit scalaire des deux vecteurs-observateur et de deux vecteurs-objet respectivement, déterminer (50, 60) numériquement sous forme de nombre réel le facteur de distance (d) ainsi que la troisième composante de chacun des deux vecteurs-observateur,
  * déterminer (70) au moins les rotations permettant de passer du repère objet au repère observateur, et
  * en déduire (80) les informations angulaires relatives à l'attitude de l'objet.

8. Appareillage selon la revendication 7, caractérisé en ce que les moyens (4) de traitement de données sont de plus agencés pour déterminer les composantes du produit vectoriel des deux vecteurs-objet dans le repère objet et des deux vecteurs-observateur dans le repère observateur, et en ce que la détermination des rotations permettant de passer du repère objet au repère observateur comprend la construction d'une première matrice carrée d'ordre 3 constituée des composantes des deux vecteurs-objet et de leur produit vectoriel dans le repère objet, l'inversion de cette première matrice, la construction d'une seconde matrice carrée d'ordre 3 constituée des composantes des deux vecteurs-objet et de leur produit vectoriel dans le repère objet, et la détermination numérique du produit de l'inverse de la première matrice par la seconde, les informations angulaires d'attitude se déduisant de la troisième ligne de la matrice produit.

9. Appareillage selon l'une des revendications 7 ou 8, caractérisé en ce que le modèle géométrique comporte un nombre de points de l'objet nettement supérieur à trois, et en ce que les moyens (4) de traitement de données sont en outre agencés pour construire, à partir de ce modèle et desdites rotations une silhouette de l'objet (8) qui soit directement comparable à l'image (2) délivrée par l'organe de prise de vue.

10. Appareillage selon la revendication 9, caractérisé en ce qu'il comprend des moyens (6, 7) pour superposer la silhouette à l'image (2) définie par les moyens de prise de vue.

**Patentansprüche**

1. Verfahren zur Ermittlung der Lage eines Objekts (8) im Raum bezüglich einer von einem Beobachter besetzten Beobachtungsstation, mit Hilfe einer entsprechenden Vorrichtung auf der Grundlage einer von der Beobachtungsstation aufgenommenen, im wesentlichen ebenen Abbildung (2) dieses Objekts (8), gekennzeichnet durch die Verfahrensschritte bestehend aus:

a) vorheriger Aufzeichnung einer numerischen Darstellung eines geometrischen Modells des Objekts (8), wobei die numerische Darstellung die Abspeicherung (5) von Koordinaten umfaßt, die in einem dreidimensionalen, mit dem Objekt verknüpften Bezugskoordinatensystem (8) gemessen werden, das nachstehend als Objektsystem bezeichnet wird und von dem mindestens drei Objektpunkte ($M_0$, $M_1$, $M_2$) optisch erkennbar sind und nicht auf einer Linie liegen,
b) Definition (10) von mindestens zwei Objektvektoren ausgehend von dieser numerischen Darstellung, welche durch Verknüpfung von zweien dieser Punkte mit dem dritten erhalten werden und deren Komponenten in dem Objektsystem gemessen werden,
c) Bestimmung (20) des Moduls von jedem dieser Objektvektoren sowie des Skalarprodukts der beiden Objektvektoren,
d) Auswertung (30) der Abbildung (2) zur Wiedergewinnung dieser drei Punkte ($M_0$, $M_1$, $M_2$) und zur Erfassung ihrer Koordinaten in der Ebene der Abbildung (2),
e) Definition vom zwei Abbildungsvektoren ausgehend vom diesen Koordinaten, welche den beiden Objektvektoren entsprechen und deren Komponenten in einem mit der Abbildung (2) verknüpften zweidimensionalen System gemessen werden,
f) Korrespondierenlassen von diesen beiden Abbildungsvektoren mit den beiden Beobachtervektoren, die in einem mit dem Beobachter (1) verknüpften und nachstehend als Beobachtersystem bezeichneten dreidimensionalen Koordinatensystem definiert sind, wobei jeder Beobachtervektor zwei zu den dem entsprechenden Abbildungsvektor zugeordneten Komponenten proportionale Komponenten aufweist, wobei der Proportionalitätsfaktor von den jeweiligen Maßstabsfakto-

ren, die bekannt sind und sich auf diese beiden Komponenten bezüglich des Objekts (8) beziehen, sowie von einem unbekannten Abstandsfaktor (d) zwischen dem Objekt und dem Beobachter (1) abhängig ist, während die dritte unbekannte Komponente jedes Beobachtervektors entlang einer in Peilrichtung verlaufenden Achse erfaßt wird,
g) Ermittlung in Form einer reellen Zahl des Abstandsfaktors (d) sowie der dritten Komponente von jedem der beiden Beobachtervektoren ausgehend von der Gleichheit zwischen den Modulen und den Skalarprodukten der beiden Beobachtervektoren und der beiden Objektvektoren zur vollständigen Festlegung dieser Beobachtervektoren in einem Raum mit Spiegelsymmetrie,
h) Bestimmung (70) der Drehungen, die den Übergang von dem Objektsystem zum Beobachtersystem gestatten, und
i) Ableitung (80) der Winkelinformationen daraus bezüglich der Lage des Objekts bezogen auf den Beobachter (1).

2. Verfahren nach Anspruch 1, dadurch gekennzeichnet, daß der Verfahrensschritt h) die folgenden Einzelschritte umfaßt:

h1) numerische Konstruktion einer ersten quadratischen Matrix dritter Ordnung, die aus den Komponenten der beiden Beobachtervektoren sowie aus den Komponenten ihres Vektorprodukts in dem Beobachtersystem aufgebaut ist,
h2) numerische Bestimmung (71) der inversen Matrix der ersten Matrix,
h3) numerische Konstruktion (25) einer zweiten quadratischen Matrix dritter Ordnung, die aus den Komponenten der beiden Objektvektoren sowie aus deren Vektorprodukt in dem Objektsystem aufgebaut ist, und
h4) numerische Bestimmung (72) zumindest der dritten Zeile der Matrix, die das Produkt aus der inversen Matrix der ersten Matrix und aus der zweiten Matrix darstellt,

und daß der Verfahrensschritt i) aus der Bestimmung (80) der Winkelinformationen mit trigonometrischen Operationen besteht, die mit Elementen der dritten Zeile der Produktmatrix durchgeführt werden.

3. Verfahren nach einem der Ansprüche 1 und 2, dadurch gekennzeichnet, daß der Verfahrensschritt h) aus der Bestimmung der Drehungen, die den Übergang vom Objektsystem zum Beobachtersystem ermöglichen, sowie aus der Beseitigung der Mehrdeutigkeit zwischen den beiden sich daraus ergebenden Lageinformationen besteht.
4. Verfahren nach einem der Ansprüche 1 bis 3, dadurch gekennzeichnet, daß der Verfahrensschritt a) aus der Aufzeichnung einer numerischen Darstellung besteht, die eine Anzahl von Punkten des Objekts (8) umfaßt, die deutlich größer als 3 ist, und daß der Verfahrensschritt b) die Auswahl von mindestens drei der Punkte dieser Darstellung zur Konstruktion von mindestens zwei Objektvektoren umfaßt.

5. Verfahren nach Anspruch 4, dadurch gekennzeichnet, daß es zusätzlich den Verfahrensschritt (90) aufweist, der aus dem Vergleich der Abbildung (2) des Objekts (8) mit einer Umrißlinie besteht, die mit Hilfe von mindestens einem Teil der Punkte des zugeordneten geometrischen Modells konstruiert wurde, welches einer geometrischen Transformation unter Berücksichtigung der Lageparameter, des Abstandsfaktors (d) sowie der Maßstabfaktoren unterzogen wurde.

6. Verfahren nach Anspruch 5, dadurch gekennzeichnet, daß ausgehend von den Unterschieden zwischen der reellen Abbildung und der Umrißlinie, die damit verglichen wird, die Wahl der ausgewählten Punkte zur Konstruktion der beiden Objektvektoren oder auch zur Modellbildung dieser Punkte verfeinert wird, wobei die in den Verfahrensschritten b) bis i) durchgeführten Operationen mit verschiedenen Sätzen von je drei Punkten wiederholt werden, die jedesmal der numerischen Darstellung entnommen werden, welche das geometrische Modell des Objekts (8) darstellt.

7. Vorrichtung zur Ermittlung der Lage eines Objekts (8) im Raum bezüglich einer von einem Beobachter besetzten Beobachtungsstation, dadurch gekennzeichnet, daß sie folgendes aufweist:

- eine an der Beobachtungsstation angeordnete Aufnahmeeinrichtung (1), die in Richtung des Objekts (8) ausgerichtet ist und eine im wesentlichen ebene Abbildung (2) dieses Objekts (8) liefert,
- einen numerischen Speicher (5), geeignet zur Abspeicherung der in einem mit dem Objekt (8) verknüpften dreidimensionalen Koordinatensystem gemessenen Koordinaten, wobei mindestens drei Punkte ($M_0$, $M_1$, $M_2$) dieses Objektes optisch erkennbar sind und nicht auf einer Linie liegen, um ein geometrisches Modell des Objekts (8) zu definieren,
- Einrichtungen (3), die die Auswertung jeder von der Aufnahmeeinrichtung gelieferten Abbildung dahingehend gestatten, daß daraus diese drei optisch erkennbaren Punkte ($M_0$, $M_1$, $M_2$) wiedergewinnbar und deren Koordinaten in der Ebene der Abbildung (2) bestimmbar sind,
- Einrichtungen (4) zur Datenverarbeitung, geeignet zur Durchführung numerischer, vektorieller und matrizenmäßiger Berechnungen anhand der gespeicherten Daten, die zu folgenden Aufgaben herangezogen werden:

* Bestimmen (10) von zwei Objektvektoren ausgehend von drei Punkten des geometrischen Modells, die durch Verknüpfung von zweien dieser Punkte mit dem dritten ermittelt werden, wobei die Komponenten dieser Objektvektoren in dem mit dem Objekt (8) verknpüften dreidimensionalen Koordinatensystem, das nachstehend als Objektsystem bezeichnet wird, gemessen werden,

* Bestimmen (20) des Moduls für jeden dieser Objektvektoren sowie des Skalarprodukts der beiden Objektvektoren,

* Definieren (40) der beiden den beiden Objektvektoren entsprechenden Abbildungsvektoren ausgehend von den aus der Abbildung (2) wiedergewonnenen Punkten, wobei die Komponenten der Abbildungsvektoren in einem mit der Abbildung (2) verknüpften zweidimensionalen System gemessen werden,

* Korrespondierenlassen dieser beiden Abbildungsvektoren und der beiden Beobachtervektoren in einem dem Beobachter (1) zugeordneten dreidimensionalen System, das nachstehend als Beobachtersystem bezeichnet wird, wobei jeder Beobachtervektor numerisch durch zwei Komponenten definiert ist, die proportional zu den dem entsprechenden Abbildungsvektor zugeordneten Komponenten sind, und wobei der Proportionalitätsfaktor von bekannten Maßstabfaktoren, die jeweils zwischen dem Objekt (8) und der Abbildung (2) entsprechend einer der Komponenten gelten, sowie von einem unbekannten Abstandsfaktor (d) abhängig ist, während die dritte unbekannte Komponente jedes Beobachtervektors längs einer Achse erfaßt wird, die in Peilrichtung der Aufnahmeeinrichtung ausgerichtet ist,

* numerisches Bestimmen (50, 60) des Abstandsfaktors (d) sowie der dritten Komponente jedes Beobachtervektors, jeweils in Form einer reellen Zahl, ausgehend von der Gleichheit zwischen den Modulen und dem Skalarprodukt der beiden Beobachtervektoren bzw. der beiden Objektvektoren,

* Bestimmen (70) zumindest der Drehungen, die den Übergang von dem Objektsystem zum Beobachtersystem ermöglichen, und

* Ableiten (80) von Winkelinformationen daraus bezüglich der Lage des Objekts.

8. Vorrichtung nach Anspruch 7, dadurch gekennzeichnet, daß die Datenverarbeitungseinrichtung (4) weiterhin dazu ausgelegt ist, die Komponenten des Vektorprodukts der beiden Objektvektoren in dem Objektsystem und der beiden Beobachtervektoren in dem Beobachtersystem zu bestimmen, und daß die Bestimmung der Drehungen, die den Übergang von dem Objektsystem zum Beobachtersystem ermöglichen, folgendes umfaßt: die Konstruktion einer ersten quadratischen Matrix dritter Ordnung, die aus Komponenten der beiden Objektvektoren und ihrem Vektorprodukt in dem Objektsystem aufgebaut ist, die Bildung der inversen Matrix zu dieser ersten Matrix, die Konstruktion einer zweiten qua-

## 23

dratischen Matrix dritter Ordnung, die aus Komponenten der beiden Objektvektoren und aus ihrem Vektorprodukt in dem Objektsystem aufgebaut ist, und die numerische Bestimmung des Produkts aus der inversen Matrix der ersten Matrix und aus der zweiten Matrix, wobei die Winkelinformationen über die Lage aus der dritten Zeile der Produktmatrix ableitbar sind.

9. Vorrichtung nach einem der Ansprüche 7 oder 8, dadurch gekennzeichnet, daß das geometrische Modell eine Anzahl von Objektpunkten aufweist, die deutlich größer als drei ist, und daß die Datenverarbeitungseinrichtung (4) außerdem dazu ausgelegt ist, um ausgehend von diesem Modell und den Drehungen eine Umrißlinie des Objekts (8) zu konstruieren, die direkt mit der von der Aufnahmeeinrichtung gelieferten Abbildung (2) vergleichbar ist.

10. Vorrichtung nach Anspruch 9, dadurch gekennzeichnet, daß sie Einrichtungen (6, 7) aufweist, um die Umrißlinie der von der Aufnahmeeinrichtung gelieferten Abbildung (2) zu überlagern.

## Claims

1. A method for determining the attitude of an object (8) in space by means of an installation in relation to an observation post (1) occupied by an observer, on the basis of a substantially planar image (2) of this object (8) taken from the observation post (1), characterized by the steps of:

a/ first recording a representation of a geometric model of the object (8), this numerical representation comprising the passing of the coordinates measured in a three-dimensional reference system into the memory (5) of at least three optically recognisable and non-aligned points ($M_0$, $M_1$, $M_2$) of the object, which reference system is associated with the object (8) and hereinafter designated the object reference system,

b/ defining (10), on the basis of this numerical representation, at least two object vectors obtained by joining two of these points to the third, and whose components are measured in the object reference system

c/ determining (20) the modulus of each of these object vectors, as well as the scalar product of the two object vectors,

d/ analysing (30) the image (2) for relocating therein these three points ($M_0$, $M_1$, $M_2$), as well as for determining their coordinates in the plane of the image (2),

e/ defining (40) on the basis of these coordinates two image vectors corresponding to the two object vectors and whose components are measured in a two-dimensional reference system associated with the image (2),

## 24

f/ correlating with these two image vectors, two observer vectors defined in a three-dimensional reference system associated with the observer (1) and designated hereinafter as the observer reference system, each one of the observer vectors having two components proportional to the components associated with the corresponding image vector, the proportionality coefficient depending on the respective known scale factors relating to these two components in relation to the object (8), as well as an unknown factor (d) of the distance between the object and the observer (1), while the third unknown component of each observer vector is taken along an axis orientated in the sighting direction,

g/ determining (50) the distance factor (d) in the form of a real number on the basis of the equality between the moduli and the scalar product of two observer vectors and of two object vectors respectively, as well as determining the third component of each of the two observer vectors in order to define completely these observer vectors in space, save for a mirror symmetry,

h/ determining (70) the rotations making it possible to pass from the object reference system to the observer reference system, and

i/ deducing (80) therefrom the angular data relating to the attitude of the object in relation to the observer (1).

2. A method according to claim 1, characterized in that step h/ comprises the following operations:

h1/ numerically constructing a first square matrix of the order of 3 constituted by the components of two observer vectors, as well as those of their vectorial product in the observer reference system,

h2/ numerically determining (71) the inverse of the first matrix,

h3/ numerically constructing (25) a second square matrix of the order of 3 constituted by the components of two object vectors, as well as by their vectorial product in the object reference system, and

h4/ numerically determining (72) at least the third line of the matrix which is the product of the inverse of the first matrix and of the second matrix,

and in that step i/ lies in determining (80) the said angular data on the basis of trigonometric operations performed on the elements of the third line of the product matrix.

3. A method according to one of claims 1 and 2, characterized in that step h/ consists of determining the rotations making it possible to pass from the object reference system to the observer reference system, and in removing the ambiguity between the two attitudes resulting therefrom.

4. A method according to one of claims 1 to 3, characterized in that step a/ consists of recording a numerical represent ation concerning a number of points of the object (8) substantially in excess of 3, and in that step b/ comprises the selection of at least three of the points of this represent at ion for the construction of at least two object vectors.

5. A method according to claim 4, characterized in that it comprises, moreover, step (90) consisting of a comparison of the image (2) of the object (8) with a silhouette constructed by means of at least a proportion of the points of the associated geometric model, subject to a geometric transformation taking into account the attitude parameters, the distance factor (d), as well as the scale factors.

6. A method according to claim 5, characterized in that on the basis of the differences between the real image and the silhouette compared therewith, one improves the selection of the points chosen for constructing the two object vectors or the modelling of these points, the operations performed during steps b/ to i/ being repeated, with different sets of three points taken up each time into the numerical representation constituting the geometric model of the object (8).

7. An installation for determining the attitude of an object (8) in space in relation to an observation post occupied by an observer, characterized in that it comprises:

— a sighting element (1) placed at the observation post aiming in the direction of the object (8) and providing a substantially planar image (2) of this object (8),
— a numerical memory (5) capable of containing the coordinates measured in a three dimensional reference system associated with the object (8) of at least three optically recognisable and non-aligned points ($M_0$, $M_1$, $M_2$) of this object in order to define a geometric model of the object (8),
— means (3) affording an analysis of each image provided by the sighting element in order to relocate therein these three optically recognisable points ($M_0$, $M_1$, $M_2$), and to determine their coordinates in the plane of the image (2),
— data processing means (4), capable of performing numerical, vectorial and matrix calculations on the data placed into the memory, and arranged for:

* determining (10) on the basis of three points of the geometric model, two object vectors obtained by joining two of these points to the third, the components of these object vectors being measured in the three-dimensional reference system associated with the object (8) and hereinafter designated as the object reference system,
* determining (20) the modulus of each of these object vectors, as well as the scalar product of the two object vectors,
* defining (40) on the basis of the points relocated in the image (2), the two image vectors corresponding to the two object vectors and whose components are measured in a two-dimensional reference system associated with the image (2),
* correlating with these two image vectors, two observer vectors in a three-dimensional reference system associated with the observer (1) and designated hereinafter as the observer reference system, each one of the observer vectors being numerically defined by two components proportional to the components associated with the corresponding image vector, the proportionality coefficient depending on the known scale factors operating respectively between the object (8) and the image (2) according to each one of the components, as well as on an unknown distance factor (d), whilst the third unknown component of each observer vector is taken along an axis orientated in the sighting direction of the sighting element,
* numerically determining (50, 60), the distance factor (d) in the form of a real number on the basis of the equality between the moduli and the scalar product of two observer vectors and of two object vectors respectively, as well as the third component of each of the two observer vectors,
* determining (70) at least the rotations making it possible to pass from the object reference system to the observer reference system, and
* deducing (80) therefrom the angular data relating to the attitude of the object.

8. An installation according to claim 7, characterized in that the data processing means (4) are, moreover, arranged for determining the components of the vectorial product of the two object vectors in the object reference system and of the two observer vectors in the observer reference system, and in that the determination of the rotations making it possible to pass from the object reference system to the observer reference system comprises the construction of a first square matrix of the order of 3 constituted by the components of the two object vectors and of their vectorial product in the object reference system, the inversion of this first matrix, the construction of a second square matrix of the order of 3 constituted by the components of the two object vectors and of their vectorial product in the object reference system, and the numerical determination of the product of the inverse of the first matrix and the second, the angular attitude data being deduced from the third line of the product matrix.

9. An installation according to one of claims 7 or 8, characterized in that the geometric model comprises a number of object points substantially in excess of three, and in that the data processing means (4) are, moreover, arranged for constructing a silhouette of the object (8) on the basis of this model and of the said rotations, which silhouette should be directly comparable to the image (2) provided by the sighting element.

10. An installation according to claim 9, characterized in that it comprises means (6, 7) for superposing the silhouette on to the image (2) defined by the sighting means.

ECRAN
OU
MONITEUR TV
2

CAMERA
OU
PROJECTEUR
OU
MAGNETOSCOPE
1

ACQUISITION
DES
3 MARQUEURS
3

FIG.1

CALCULATEUR
4

θ
φ
DISTANCE

MEMOIRE
5

ECRAN
OU
MONITEUR TV
2

MELANGEUR
OU
SUPERPOSEUR
D'IMAGES
7

CAMERA
OU
PROJECTEUR
OU
MAGNETOSCOPE
1

ACQUISITION
DES
3 MARQUEURS
3

IMAGE OU
SILHOUETTE
SYNTHETIQUE
6

FIG.8

CALCULATEUR
4

θ
φ
DISTANCE

MEMOIRE
5

FIG. 2

Repère "avion" Ra = (X, Y, Z)

θ

φ

d

Z

V

Repère "écran" (u, v)

v

u

U

9

Repère "observateur"
Ro = (U, V, W)

W

8

EP 0 141 706 B1

3

FIG. 3A

Repère avion Ra = (X, Y, Z)
Repère observateur Ro = (U, V, W)

FIG. 3B

Repère "ecran"
Re = (u, v)

FIG. 4

10

CHOIX DE $\overrightarrow{L_1}$ ET $\overrightarrow{L_2}$ = TROIS POINTS DE L'AVION, INCLUS DANS LE MODELE

20

CALCULS RELATIFS A $\overrightarrow{L_1}$ ET $\overrightarrow{L_2}$ DANS LE REPERE TRIDIMENSIONNEL AVION $(L_1{}^2, L_2{}^2, \overrightarrow{L_1} \cdot \overrightarrow{L_2}$ ET $\overrightarrow{L_1} \wedge \overrightarrow{L_2})$

30

ACQUISITION SUR L'IMAGE DES TROIS POINTS-IMAGE CORRESPONDANT A $\overrightarrow{L_1}$ ET $\overrightarrow{L_2}$, D'OU $\overrightarrow{l_1}$ ET $\overrightarrow{l_2}$ DANS LE REPERE IMAGE BIDIMENSIONNEL

40

CALCULS RELATIFS A $\overrightarrow{l_1}$ ET $\overrightarrow{l_2}$ DANS LE REPERE IMAGE BIDIMENSIONNEL $(C1 = l_1{}^2 ; C2 = l_2{}^2 ; C3 = \overrightarrow{l_1} \cdot \overrightarrow{l_2})$

50

DETERMINATION DE LA DISTANCE d

60

CALCULS RELATIFS A $\overrightarrow{L_1}$ ET $\overrightarrow{L_2}$ DANS UN REPERE TRIDIMENSIONNEL LIE A L'OBSERVATEUR ET COMPRENANT LE REPERE IMAGE BIDIMENSIONNEL (COMPOSANTES DE $\overrightarrow{L_1}$ DE $\overrightarrow{l_2}$ ET DE $\overrightarrow{L_1 \wedge L_2}$)

70

DETERMINATION DES COMPOSANTES DU REPERE OBSERVATEUR DANS LE REPERE AVION

80

CALCUL D'UN OU DEUX JEUX D'ANGLES D'ATTITUDE DE L'AVION PAR RAPPORT A L'OBSERVATEUR

90

SYNTHESE, A PARTIR DU MODELE D'UNE SILHOUETTE PLANE SUPERPOSABLE A L'IMAGE DE L'AVION

MODELE GEOMETRIQUE AVION MEMORISE (MEMOIRE 5)

| N° DE POINT | CX | CY | CZ |
|---|---|---|---|
| $P_1$ | $CX_1$ | $CY_1$ | $CZ_1$ |
| $P_2$ | $CX_2$ | $CY_2$ | $CZ_2$ |
| $\vdots$ | $\vdots$ | $\vdots$ | $\vdots$ |
| $P_N$ | $CX_N$ | $CY_N$ | $CZ_N$ |

FIG. 5A

10 — CHOIX DE 3 POINTS $M_0 = P_i$ , $M_1 = P_j$ , $M_2 = P_k$ , DONC DE 2 VECTEURS $\overrightarrow{L_1} = \overrightarrow{M_0 M_1}$ , $\overrightarrow{L_2} = \overrightarrow{M_0 M_2}$

21 — CALCUL
$X_1 = CX_j - CX_i$ ; $X_2 = CX_k - CX_i$
$Y_1 = CY_j - CY_i$ ; $Y_2 = CY_k - CY_i$
$Z_1 = CZ_j - CZ_i$ ; $Z_2 = CZ_k - CZ_i$

22 — CALCUL
$L_1^2 = X_1^2 + Y_1^2 + Z_1^2$
$L_2^2 = X_2^2 + Y_2^2 + Z_2^2$
$PSA_{12} = X_1 X_2 + Y_1 Y_2 + Z_1 Z_2$

23 — MEMORISATION $L_1^2$ $L_2^2$ $PSA_{12}$

FIG. 5

24 — CALCUL
$X_3 = Y_1 Z_2 - Y_2 Z_1$
$Y_3 = Z_1 X_2 - Z_2 X_1$
$Z_3 = X_1 Y_2 - X_2 Y_1$

25 — MEMORISATION (MATRICE Ma)
$$\begin{bmatrix} X_1 , & Y_1 , & Z_1 \\ X_2 , & Y_2 , & Z_2 \\ X_3 , & Y_3 , & Z_3 \end{bmatrix}$$

FIG. 6

**FIG. 6A** — ECRAN 2 $R_e = (u,v)$

**ACQUISITION** 30
$u_0$, $u_1$, $u_2$
$v_0$, $v_1$, $v_2$

**CALCUL** 41
$k_u$ → $U_1^* = k_u (u_1 - u_0)$     $U_2^* = k_u (u_2 - u_0)$
$k_v$ → $V_1^* = k_v (v_1 - v_1)$     $V_2^* = k_v (v_2 - v_2)$

42
$C_1 = U_1^{*2} + V_1^{*2}$     $C_2 = U_2^{*2} + V_2^{*2}$
$C_3 = U_1^* \cdot U_2^* + V_1^* \cdot V_2^*$

43
$L_1^2$ →
$L_2^2$ →
$PSA_{12}$ →
$A = C_1 \cdot C_2 - C_3^2$
$B = -L_1^2 \cdot C_2 - L_2^2 \cdot C_1 + PSA_{12} \, C_3$
$C = L_1^2 \cdot L_2^2 - PSA_{12}^2$

**CALCUL FACTEUR DE DISTANCE d** 50
$$d = \sqrt{\frac{-B - \sqrt{B^2 - 4AC}}{2A}}$$

**CALCUL DES COMPOSANTES DES VECTEURS OBSERVATEUR** 61
$U_1 = U_1^* \cdot d$     $U_2 = U_2^* \cdot d$
$V_1 = V_1^* \cdot d$     $V_2 = V_2^* \cdot d$
$W_1 = \pm\sqrt{L_1^2 - C_1 \cdot d^2}$     $W_2 = \pm\sqrt{L_2^2 - C_2 d^2}$

62
$X_1, Y_1, Z_1$ →
$X_2, Y_2, Z_2$ →
**LEVER D'AMBIGUITE (PARTIEL) SUR $W_1$ ET $W_2$:**
**TEST SUR $X_1 X_2 + Y_1 Y_2 + Z_1 Z_2 - U_1 U_2 - V_1 V_2$**

63
$W_1$ ET $W_2$ DE MEME SIGNE

64
$W_1$ ET $W_2$ DE SIGNE CONTRAIRE

65
**MEMORISATION $U_1, U_2, V_1, V_2, (W_1), (W_2)$**
**ET SIGNE $W_1 - W_2$**

**VERS FIG.7**

DE LA FIG. 6

CHOIX OU DETERMINATION (PAR AILLEURS) DU
SIGNE DE $W_1$, DONC DE $W_2$    66

CALCUL PRODUIT VECTORIEL $L_1 \wedge L_2$ DANS $R_0$    67

$$U_3 = V_1 . W_2 - V_2 . W_1$$
$$V_3 = W_1 . U_2 - W_2 . U_1$$
$$W_3 = U_1 . V_2 - U_2 . V_1$$

CALCUL DE $[M_0]^{-1}$, MATRICE INVERSE DE    71

$$\begin{bmatrix} U_1 & V_1 & W_1 \\ U_2 & V_2 & W_2 \\ U_3 . & V_3 & W_3 \end{bmatrix}$$

$[M_a]$

MULTIPLICATION MATRICIELLE    72
$$[M_p] = [M_0]^{-1} . [M_a]$$
(AU MOINS PARTIELLEMENT)

CALCUL DE L'ATTITUDE    80

$$\theta = \text{Arc tg} \ \frac{Mp(3,2)}{Mp(3,1)}$$

$$\phi = \text{Arc tg} \ \frac{[M_p^2(3,1) + M_p^2(3,2)]^{1/2}}{Mp(3,3)}$$

82

CHANGER
SIGNE $W_1 . W_2$

NON

ATTITUDE
VRAISEMBLABLE ?    81

OUI

FIG. 7

FIN OU GENERATION
DE SILHOUETTE (FIG.9)    83

| n° | CX | CY | CZ |
|---|---|---|---|
| $P_1$ | $CX_1$ | $CY_1$ | $CZ_1$ |
| $P_i$ | $CX_i$ | $CY_i$ | $CZ_i$ |
| $P_N$ | $CX_N$ | $CY_N$ | $CZ_N$ |

CHOIX $M_0 = P_i$, ET CALCUL

$$X_j = CX_j - CX_i$$
$$Y_j = CY_j - CY_i \quad \right\} \ j = 1, N$$
$$Z_j = CZ_j - CZ_i$$

MATRICE $M_p$ (3 × 3)

DISTANCE d

d

91

COMPOSANTES DE $\vec{L_j}$ SUR $\vec{U}$ ET $\vec{V}$

$$\vec{L_j} \cdot \vec{U} = X_j \cdot M_p(1,1) + Y_j \cdot M_p(1,2) + Z_j \cdot M_p(1,3)$$

$$\vec{L_j} \cdot \vec{V} = X_j \cdot M_p(2,1) + Y_j \cdot M_p(2,2) + Z_j \cdot M_p(2,3)$$

92

$$u_j = u_0 + (\vec{L_j} \cdot \vec{U})/(k_u \, d)$$

$$v_j = v_0 + (\vec{L_j} \cdot \vec{V})/(k_v \, d)$$

$k_u$ , $k_v$ DE L'ECRAN

$u_0$ , $v_0$ DU PIVOT

FIG. 9

2 — ECRAN $R_e = (u, v)$

v

$v_j$

$v_0$

PIVOT

$u_j$ $u_0$

u